Europäisches Patentamt

European Patent Office

Office européen des brevets

(11) Publication number: **0 275 237**
**A2**

## EUROPEAN PATENT APPLICATION

(21) Application number: **88830001.9**

(22) Date of filing: **05.01.88**

(51) Int. Cl.⁴: **F 24 D 17/00**

(30) Priority: **08.01.87 IL 81207**

(43) Date of publication of application:
**20.07.88 Bulletin 88/29**

(84) Designated Contracting States:
**AT BE CH DE ES FR GB GR IT LI LU NL SE**

(71) Applicant: **Meshulam, Yair**
**13 Hatzanchanim Street**
**Rehovot (IL)**

(72) Inventor: **Meshulam, Yair**
**13 Hatzanchanim Street**
**Rehovot (IL)**

(74) Representative: **Bazzichelli, Alfredo et al**
**c/o Società Italiana Brevetti S.p.A. Piazza Poli 42**
**I-00187 Roma (IT)**

(54) **Shower apparatus.**

(57) Shower apparatus including a heated water outlet, a water supply line connected to the heated water outlet upstream thereof, a water heater installed in the water supply line and a heat exchanger defining a fluid path between fluid entry and exit ports in the water supply line, and wherein the fluid entry and exit ports have upstream locations relative to the water heater.

FIG 1

**Description**

## FIELD OF THE INVENTION

The present invention relates generally to water heating devices for domestic use and more particularly to water heater systems particularly useful in showers and the like.

## BACKGROUND OF THE INVENTION

Various types of water heaters are available on the market, including these that are designed to provide supplementary heating of water when the quantity of hot water needed within a particular time exceeds that which a main water heating system is able to provide.

Supplementary water heaters are available for centralized heating of a water supply, for example, electric heaters designed to be immersed in main hot water tanks. Also available are water heaters for local heating of water, such as electric heaters that may be installed in the hot water supply line to a shower head.

Instantaneous water heaters are distinguished by their ability to heat cold water quickly to a relatively high temperature. However, a very high energy input is needed to raise the temperature of fast-flowing cold water to a relatively high temperature. Therefore, such heaters are not able to sufficiently heat water for a shower on an instantaneous basis. As a result supplementary water heaters of the instantaneous type have not attained commercial success for shower applications.

## SUMMARY OF THE INVENTION

It is an aim of the present invention to provide a shower system which overcomes disadvantages of conventional instantaneous water heaters.

There is therefore provided, in accordance with a preferred embodiment of the invention, shower apparatus including a heated water outlet, a water supply line connected to the heated water outlet upstream thereof, a water heater installed in the water supply line and a heat exchanger defining a fluid path between fluid entry and exit ports in the water supply line, and wherein the fluid entry and exit ports have upstream locations relative to the water heater.

Additionally in accordance with a preferred embodiment of the invention, the heat exchanger comprises a fluid conduit, and the fluid entry and exit ports define extreme ends of the fluid conduit, wherein the fluid entry port is provided for conducting a flow of relatively cool water from the water supply line into the conduit, and the fluid exit port is provided for conducting the flow of water from the conduit back into the water supply line, and wherein the conduit is further adapted to be in thermal contact with a flow of relatively hot waste water issuing from the water outlet.

Additionally in accordance with a preferred embodiment of the invention, the heat exchanger has a generally planar configuration and is located in a floor area associated with the water outlet, where waste water flows and may be allowed to collect.

## BRIEF DESCRIPTION OF THE DRAWINGS

The present invention will be understood and appreciated more fully from the following detailed description taken in conjunction with the drawings, in which:

Fig. 1 shows shower apparatus wherein there has been installed a heat exchanger, designed and constructed in accordance with a preferred embodiment of the invention;

Fig. 2 is a side view of the shower apparatus of Fig. 1;

Fig. 3A shows a partially cut-away plan view of the heat recycling unit of Fig. 1;

Fig. 3B is a sectional view taken along the line B-B in Fig. 3A;

Fig. 3C is a sectional view taken along the line C-C in Fig. 3A; and

Fig. 4 shows a sectional view of a heat recycling unit constructed in accordance with an alternative preferred embodiment of the invention, corresponding to the sectional view of Fig. 3C.

## DETAILED DESCRIPTION OF THE INVENTION

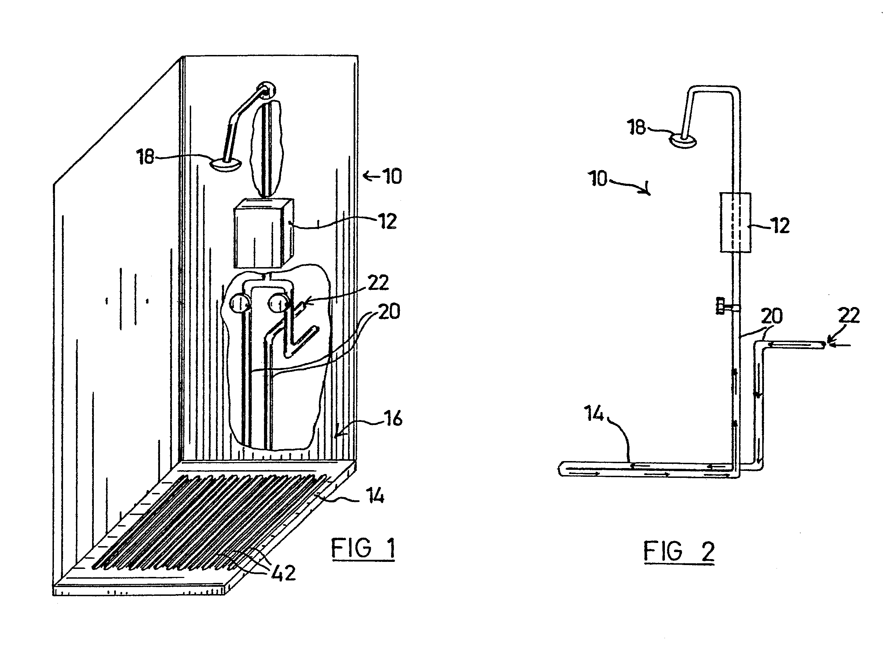

Referring to Figs. 1 and 2, there is shown shower apparatus 10, wherein a conventional instantaneous-type water heater 12 has been installed for providing in-line heating of water for the shower. In accordance with a preferred embodiment of the present invention, a heat exchanger 14 is connected to shower apparatus 10, and installed in a floor area 16 associated therewith, in order to at least partially recycle the heat stored in waste water issuing from shower head 18, in a way that will be explained below.

Heat exchanger 14 is connected into the water supply line 20 to shower apparatus 10, such that the water, supplied at a location 22, passes through the heat exchanger, where it is partially heated, passed downstream to water heater 12, where the necessary supplementary heat is supplied, and finally flows out of shower head 18.

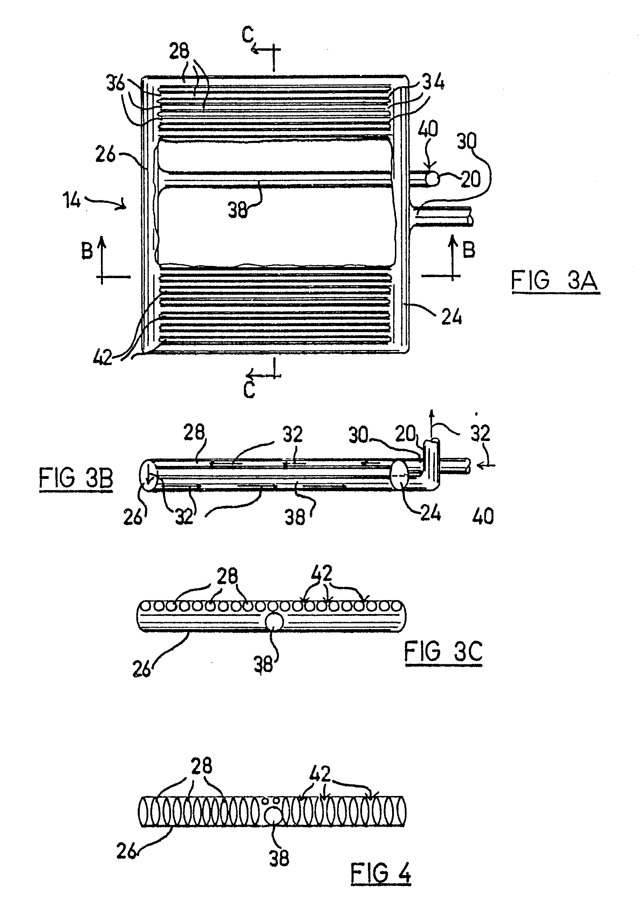

Now, referring to Figs. 3A, 3B and 3C, heat exchanger 14 is shown typically to comprise a distribution pipe 24, a T-shaped outlet pipe 26, and a plurality of rigid parallel tubes 28, made of heat transmissive material, connecting distribution pipe 24 to outlet pipe 26.

Distribution pipe 24 comprises an inlet 30, defining a fluid entry location from water supply line 20. The direction of fluid flow thoughout heat exchanger 14 is as indicated by arrows 32. Distribution pipe 24 further comprises a plurality of outlets 34 (Figure 3A), which connect with tubes 28, and correspond to a plurality of ports 36 (Figure 3A) on outlet pipes 26, through which water flows from tubes 28. Water flows from outlet pipe 26 through a T-extension pipe 38 and back into supply line 20 at fluid exit location 40.

Although water heater 12 (Figures 1 and 2), as stated above, may not be adequate to independently heat up cold water to a sufficiently high temperature, a significant amount of heat is supplied thereby to the water, such that an initial volume of cold water passing through water heater 12, contains stored heat as it issues from shower head 18 (Figures 1 and 2) and flows to waste.

As heat exchanger 14 is located upstream of water heater 12, cold water is provided to the heat exchanger will always enter it at the relatively low temperature at which it was supplied. However, after the initial volume of cold water has passed through heat exchanger 14, and then on to water heater 12 where it is heated up, it finally issues out of shower head 18 as warm water. After the warm water leaves shower head 18, it drops towards floor area 16 (Figs. 1 and 2) where heat exchanger 14 is located, and washes over the heat exchanger thereby coming into thermal contact with cold water passing internally of heat exchanger 14.

As tubes 28 are made from a heat transmissive material, and as there is a temperature gradient set up between a volume of cold water flowing through tubes 28 and the volume of warm waste water washing over the tubes, a thermal transfer occurs between the two bodies of water, such that the cold water inside the tubes tends to heat up, as the waste water cools down, resulting from their contact.

Finally, the waste water drains away through drainage slits 42 defined by tubes 28 and water that has passed through heat exchanger 14 and that has been warmed up to an extent, passes on to water heater 12 where it is heated up to a desired temperature, prior to flowing out of shower head 18.

With particular reference to Figs. 3C and 4, there are shown two different alternative configurations of tubes 28: a first configuration, in Fig. 3C, having a round cross-section; and a second configuration, in Fig. 4, having a fin-shaped cross-section. Although round tubes may be easier, and therefore cheaper, to manufacture than tubes having a fin-shaped section, there are disadvantages in using the latter, fin-shaped tubes as opposed to the former, round tubes, as will be explained below.

It will be obvious to persons to skilled in tha art, that a tube having a fin-shaped cross-section exposes a greater surface area of cold water flowing therethrough to thermal contact with the warm waste washing over, and therefore is likely to be more efficient than an otherwise similar heat exchanger employing round tubes.

Furthermore, in a preferred embodiment of the invention, it is desirable that, as stated above, heat exchanger 14 be located at a floor area 16 associated with a shower 10. Heat exchanger 14 is preferably capable of taking the weight of a person.

It may be appreciated that the shower system described above may be provided as an integral unit. Alternatively a heat exchange sub-unit may be provided in accordance with the present invention for attachment upstream of the water inlet to the water heater.

It will be appreciated by persons skilled in the art, that the present invention is not limited to what has been particularly shown and described hereinabove.

Rather, the scope of the present invention is limited solely by the claims which follow:

## Claims

1. Shower apparatus comprising:
a heated water outlet,
a water supply line connected to said heated water outlet upstream thereof;
a water heater installed in said water supply line; and
a heat exchanger defining a fluid path between fluid entry and exit ports in said water supply line, and wherein said fluid entry and exits ports have upstream locations relative to said water heater.

2. Shower apparatus according to claim 1, and wherein said heat exchanger comprises a fluid conduit, and wherein said fluid entry and exit ports define extreme ends of said fluid conduit, wherein said fluid entry port is provided for conducting a flow of relatively cool water from said water supply line into said conduit, and said fluid exit port is provided for conducting the flow of water from said conduit back into said water supply line, and wherein said conduit is further adapted to be in thermal contact with a flow of relatively hot waste water issuing from said water outlet.

3. Shower apparatus according to claim 2, and wherein said water heater comprises a water heater of the instantaneous type.

4. Shower apparatus according to claim 3, and wherein said heat exchanger has a generally planar configuration and is located in a floor area associated with said water outlet.

5. Shower apparatus according to claim 4, and wherein said conduit comprises:
a distribution pipe, having a single fluid entry location for connection to said conduit fluid entry port and a plurality of fluid outlet ports;
an outlet pipe, having a single fluid exit location for connection to said conduit fluid exit port, and having a plurality of fluid inlet ports; and
a plurality of tubes having first and second ends, and wherein said first ends are connected to said plurality of fluid outlet ports of said distribution pipe, and said second ends are connected to said plurality of said fluid inlet ports of said outlet pipe.

6. Shower apparatus according to claim 5, and wherein said plurality of tubes comprises a plurality of tubes of fin-shaped cross-sectional configuration.

7. For use with shower apparatus and the like including a heated water outlet, a water supply line connected to said heated water outlet upstream thereof, and a water heater installed in said water supply line;
a heat exchanger defining a fluid path between fluid entry and exit ports in said water supply line, and wherein said fluid entry and exit ports have upstream locations relative to said water

heater.

18

← 10

12

22

20

16

14

42

FIG 1

18

10

12

20

22

14

FIG 2

0275237

0275237

FIG 3A

FIG 3B

FIG 3C

FIG 4